(19) Europäisches Patentamt
European Patent Office
Office européen des brevets

(11) **EP 3 503 283 B1**

(12) **FASCICULE DE BREVET EUROPEEN**

(45) Date de publication et mention
de la délivrance du brevet:
**28.07.2021 Bulletin 2021/30**

(51) Int Cl.:
*H01P 1/04* *(2006.01)*       *H01P 3/12* *(2006.01)*
*H01P 3/123* *(2006.01)*       *H01P 11/00* *(2006.01)*
*B33Y 80/00* *(2015.01)*

(21) Numéro de dépôt: **18212751.4**

(22) Date de dépôt: **14.12.2018**

(54) **DISPOSITIF RADIOFRÉQUENCE PASSIF, ET PROCÉDÉ DE FABRICATION**

PASSIVE FUNKFREQUENZVORRICHTUNG UND IHR HERSTELLUNGSVERFAHREN

PASSIVE RADIOFREQUENCY DEVICE, AND METHOD FOR MANUFACTURING SAME

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2017 FR 1771399**

(43) Date de publication de la demande:
**26.06.2019 Bulletin 2019/26**

(73) Titulaire: **SWISSto12 SA
1020 Renens (CH)**

(72) Inventeurs:
• **Billod, Mathieu
74160 Présilly (FR)**
• **de Rijk, Emile
1218 Grand-Saconnex (CH)**

(74) Mandataire: **P&TS SA (AG, Ltd.)
Avenue J.-J. Rousseau 4
P.O. Box 2848
2001 Neuchâtel (CH)**

(56) Documents cités:
**WO-A1-2017/208153     FR-A1- 2 282 172
US-A- 3 577 105**

• **RUOYU ZHU ET AL: "Versatile Manufacturing of
Split-Block Microwave Devices Using Rapid
Prototyping and Electroplating", IEEE
ANTENNAS AND WIRELESS PROPAGATION
LETTERS, vol. 16, 5 mai 2016 (2016-05-05), pages
157-160, XP055509609, US ISSN: 1536-1225, DOI:
10.1109/LAWP.2016.2563398**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 503 283 B1

**Description**

Domaine technique

La présente invention concerne un procédé de fabrication additive de dispositif radiofréquence passif, et un dispositif radiofréquence passif fabriqué selon ce procédé.

Etat de la technique

Les dispositifs radiofréquence passifs servent à propager ou à manipuler des signaux radiofréquence sans utiliser de composants électroniques actifs. Les dispositifs radiofréquence passifs comportent par exemple des guides d'onde passifs basés sur le guidage d'ondes à l'intérieur de canaux métalliques creux, des filtres, des antennes, des convertisseurs de mode, etc. De tels dispositifs peuvent être utilisés pour le routage de signal, le filtrage fréquentiel, la séparation ou recombinaison de signaux, l'émission ou la réception de signaux dans ou depuis l'espace libre, etc.

Un tel dispositif radiofréquence passif conventionnel peut être constitué par un guide d'onde formé d'un tube creux, dont la forme et les proportions déterminent les caractéristiques de propagation pour une longueur d'onde donnée du signal électromagnétique. Les guides d'onde classiques utilisés pour les signaux radiofréquence ont des ouvertures internes de section rectangulaire ou circulaire. Ils permettent de propager des modes électromagnétiques correspondant à différentes distributions de champ électromagnétique le long de leur section. Dans l'exemple décrit, le guide d'onde a une hauteur b le long de l'axe y et une largeur a le long de l'axe z.

Les dispositifs radiofréquence sont typiquement utilisés à l'extérieur, par exemple dans l'aérospatial (avion, hélicoptère, drone) pour équiper un engin spatial dans l'espace, sur un bateau en mer ou sur un engin sous-marin, sur des engins évoluant dans le désert ou en haute montagne, à chaque fois dans des conditions hostiles voire extrêmes. Dans ces milieux, les dispositifs radiofréquence sont notamment exposés à :

- des pressions et des températures extrêmes qui varient de façon importante ce qui induit des chocs thermiques répétés;
- un stress mécanique, le guide d'ondes étant intégré dans un engin qui subit des chocs, des vibrations et des charges qui impactent le guide d'ondes;
- des conditions météorologiques et environnementales hostiles dans lesquels évoluent les engins équipés de guide d'ondes (vent, gel, humidités, sable, sels, champignons/bactéries).

Pour répondre à ces contraintes, on connait des guides d'ondes formés par assemblage de plaques métallique préalablement usinées, qui permettent de fabriquer des guides d'ondes aptes à évoluer dans des environnements hostiles. En revanche, la fabrication de ces guides d'ondes est souvent difficile, coûteuse et difficilement adaptable à la fabrication de guide d'ondes légers et aux formes complexes.

US2012/0033931A1 décrit un guide d'onde formé d'une pièce avec une section en U et d'un couvercle recouvrant cette pièce. Les deux composants sont assemblés et soudés entre eux.

Des travaux récents ont démontré la possibilité de réaliser des dispositifs radiofréquence passifs, y compris des antennes, des guides d'ondes, des filtres, des convertisseurs, etc, à l'aide de méthodes de fabrication additives, par exemple d'impression 3D. On connait en particulier la fabrication additive de guides d'ondes comportant à la fois des matériaux non conducteurs, tels que des polymères ou des céramiques, et des métaux conducteurs.

Des guides d'ondes comportant des parois céramiques ou polymères fabriquées par une méthode additive puis recouvertes d'un placage métallique ont notamment été suggérés. Les surfaces internes du guide d'ondes doivent en effet être conductrices électriquement pour opérer. L'utilisation d'une âme non conductrice permet d'une part de réduire le poids et le coût du dispositif, d'autre part de mettre en œuvre des méthodes d'impression 3D adaptées aux polymères ou aux céramiques et permettant de produire des pièces de haute précision avec une faible rugosité.

A titre d'exemple, l'article de Mario D'Auria et al, "3-D PRINTED METAL-PIPE RECTANGULAR WAVEGUIDES", 21 août 2015, IEEE Transactions on components, packaging and manufacturing technologies, Vol. 5, No 9, pages 1339-1349, décrit au paragraphe III un procédé de fabrication de l'âme d'un guide d'onde par dépôt de fil en fusion (FDM, Fused deposition modeling).

On connaît par exemple des guides d'ondes réalisés par fabrication additive et comportant une âme non conductrice fabriquée par exemple par stéréolithographie, par selective laser melting, par selective laser sintering, ou par un autre procédé additif. Cette âme comporte typiquement une ouverture interne pour la propagation du signal radiofréquence. Les parois internes de l'âme autour de l'ouverture peuvent être revêtues d'un revêtement électriquement conducteur, par exemple d'un placage métallique.

La fabrication additive de dispositifs radiofréquence passifs permet de réaliser des dispositifs de forme complexe qu'il serait difficile ou même impossible de réaliser par usinage. La fabrication additive possède cependant ses propres contraintes et ne permet pas la fabrication de certaines formes ou de pièces de grandes dimensions. D'autre part, des opérations de reprise après fabrication, par exemple des nettoyages, des polissages, des perçages, etc sont difficiles à réaliser à l'intérieur de pièces concaves, par exemple à l'intérieur d'un canal de guide d'onde.

US2012/0084968A1 décrit un procédé de fabrication de guides d'ondes passifs en plusieurs pièces réalisées par impression 3D puis métallisées avant d'être assemblées. La fabrication en plusieurs pièces rend le procédé plus flexible et permet de réaliser des pièces de forme complexe qu'il serait impossible d'imprimer en une seule opération. Cependant, ce procédé crée des discontinuités de la couche métallique au niveau de la jonction entre les différentes pièces métallisées, qui perturbent la transmission du signal dans le guide d'onde. D'autre part, l'ajustement précis des différentes pièces est difficile à garantir, et ne peut guère être amélioré en polissant ou ajustant la couche métallique qui est généralement trop fine.

Le document US3577105 décrit un guide d'onde comprenant deux pièces qui peuvent s'assembler et se désassembler. Chaque pièce est formée avant assemblage. Chaque pièce comprend une couche de substrat, ladite couche de substrat étant recouverte d'une couche métallique. Ainsi, dans US3577105, les pièces sont assemblées après métallisation, autrement dit la couche métallique sépare les pièces qui seront assemblées, ce qui n'est pas le cas de l'invention ici décrite.

Bref résumé de l'invention

Un but de la présente invention est de proposer un dispositif radiofréquence passif exempt ou minimisant les limitations des dispositifs connus.

Un but de l'invention est notamment de fournir un dispositif radiofréquence passif, par exemple un guide d'ondes, réalisé par fabrication additive.

Selon l'invention, ces buts sont atteints notamment au moyen d'un dispositif radiofréquence passif comprenant:

- une âme formée par assemblage de plusieurs pièces en contact direct les unes contre les autres, au moins une desdites pièces comportant un logement pour la colle, au moins certaines desdites pièces étant fabriquées individuellement par fabrication additive;
- une enveloppe conductrice métallique entourant ladite âme sans séparer lesdites pièces les unes des autres.

Ce dispositif présente l'avantage d'une enveloppe conductrice qui peut être déposée après assemblage des pièces, ce qui garantit une couche conductrice dépourvue de discontinuités.

Le collage des pièces formant l'âme garantit leur maintien rigide.

La présence de logements pour la colle permet d'éviter la présence d'un film de colle entre les surfaces principales des pièces assemblées, ce qui garantit un positionnement relatif précis et indépendant de l'épaisseur ou de la planéité du film de colle.

Le logement peut être constitué par une rainure, une gorge, ou un trou borgne de section ronde, carrée ou rectangulaire, formant une cavité concave sur une surface de la pièce destinée à être mise en contact avec une autre pièce lors de l'assemblage.

Les pièces peuvent être collées entre elles au moyen d'une colle chargée de particules métalliques ou céramiques pour faciliter l'assemblage.

Les différentes pièces formant l'âme peuvent être alignées entre elles à l'aide d'au moins une vis ou goupille.

La ou les goupilles peuvent s'étendre perpendiculairement à la surface de la pièce destinée à être mise en contact avec une autre pièce lors de l'assemblage, et s'insérer dans un trou borgne prévu dans la surface correspondante de la pièce assemblée.

La ou les goupilles peuvent être métalliques ou faites d'autres matériaux. Elles peuvent être chassées dans la pièce après la fabrication additive.

Les différentes pièces formant l'âme peuvent être vissées entre elles à l'aide d'au moins une vis. La ou les vis peuvent être métalliques ou faites d'autres matériaux.

Les vis peuvent être insérées lors de l'assemblage.

Les vis peuvent être retirées après durcissement de la colle et avant la déposition de l'enveloppe conductrice. Cela permet d'éviter la déposition d'une couche conductrice sur les têtes de vis, et ainsi de garantir une meilleure planéité de l'enveloppe conductrice.

Les différentes pièces formant l'âme peuvent être soudées entre elles.

Les différentes pièces formant l'âme peuvent être fusionnées sans apport de matière entre elles, par exemple en terminant leur durcissement après assemblage. Par exemple, dans le cas de pièces réalisées par impression 3D de polymère, les pièces peuvent être jointes par un durcissement thermique ou UV après leur assemblage.

Dans un mode de réalisation, l'enveloppe conductrice métallique recouvre toutes les faces de l'âme de manière ininterrompue.

Dans un autre mode de réalisation, le dispositif est constitué par un guide d'onde muni de parois latérales avec des surfaces externes et internes, les surfaces internes délimitant un canal, ladite enveloppe conductrice recouvrant ladite surface interne mais pas la totalité de la surface externe.

L'épaisseur de la couche conductrice métallique est avantageusement au moins égale à cinq fois la profondeur de peau $\delta$, de préférence au moins vingt fois la profondeur de peau $\delta$. Cette épaisseur importante n'est pas nécessaire pour la transmission du signal, mais contribue à la rigidité du dispositif, qui est ainsi garantie par l'enveloppe métallique malgré une âme en plusieurs pièces potentiellement moins rigide qu'une âme monolithique.

La profondeur de peau $\delta$ (delta) est définie comme:

$$\delta = \sqrt{\frac{2}{\mu \, 2\pi f \, \sigma}}$$

dans laquelle μ (mu) est la perméabilité magnétique du métal plaqué, f est la fréquence radio du signal à transmettre et σ (rho) est la conductivité électrique du métal plaqué. Intuitivement, il s'agit de l'épaisseur de la zone où se concentre le courant dans le conducteur, à une fréquence donnée.

Cette solution présente notamment l'avantage par rapport à l'art antérieur de fournir des guides d'ondes assemblés par fabrication additive qui sont plus résistants aux contraintes auxquelles ils sont exposés (contraintes thermiques, mécaniques, météorologiques et environnementales).

Dans les dispositifs radiofréquence assemblés par fabrication additive selon les méthodes existantes, les propriétés structurelles, mécaniques, thermiques et chimiques dépendent essentiellement des propriétés de l'âme. Typiquement, on connait des guides d'ondes dans lequel la couche conductrice déposée sur l'âme est très mince, inférieure à la profondeur de peau du métal constituant la couche conductrice. Ainsi, il était généralement admis que pour améliorer les propriétés structurelles et mécaniques des guides d'ondes il fallait augmenter l'épaisseur et/ou la rigidité de l'âme. Il était aussi admis qu'il faut réduire l'épaisseur de la couche pelliculaire conductrice, afin d'alléger la structure.

En augmentant l'épaisseur de la couche conductrice pour que cette dernière atteigne une épaisseur au moins égale à cinq fois la profondeur de peau δ du métal de la couche conductrice, de préférence au moins égale à vingt fois cette profondeur, les propriétés structurelles, mécaniques, thermiques et chimiques du guide d'onde dépendent majoritairement, voire quasi exclusivement, de la couche conductrice. Ce comportement surprenant est observé bien que l'épaisseur de la couche conductrice reste significativement inférieure à l'épaisseur de l'âme.

Ce mode de réalisation permet de diminuer, voire de supprimer, la rugosité de la surface conductrice. Cela permet également de renforcer la résistance en traction, en torsion, en flexion du dispositif, par exemple la rigidité du guide d'ondes.

Au moins deux différentes pièces formant l'âme peuvent être séparées l'une de l'autre selon un plan. Cela facilite l'ajustement précis des deux pièces grâce à la fabrication de deux surfaces planes.

Au moins deux différentes pièces formant l'âme peuvent être séparées l'une de l'autre selon une surface non plane. Cette surface peut par exemple être employée pour maintenir les deux pièces entre elles, par exemple à l'aide d'un assemblage de type chevron-mortaise ou tenon mortaise.

Le plan de séparation entre deux pièces de l'âme peut être perpendiculaire à la direction de propagation du signal. Il est par exemple ainsi possible de fabriquer un guide d'one allongé à partir de plusieurs segments linéaires consécutifs.

Le plan de séparation entre deux pièces de l'âme peut être parallèle à la direction de propagation du signal

Le dispositif peut comporter une couche de lissage destinée à lisser au moins partiellement les irrégularités de la surface de l'âme. L'enveloppe conductrice est déposée par-dessus la couche de lissage.

A l'issue de la fabrication additive de l'âme, il a été observé que le processus de fabrication additive créé une forte rugosité (par exemple des creux et des bosses), notamment sur les bords et surface de l'âme, notamment sur les bords en biais. Ces creux et bosses peuvent prendre la forme de marches d'escalier, chaque marche représentant l'ajout d'une couche de matériau non conducteur lors de la fabrication additive. Il a été observé qu'après recouvrement de l'âme par une couche conductrice fine, la rugosité de l'âme persistait de sorte que la surface après métallisation présentait encore une rugosité qui perturbait la transmission du signal RF. Dans ce cas, l'ajout d'une couche de lissage entre l'âme et la couche conductrice permet de diminuer, voire de supprimer, cette rugosité ce qui améliore la transmission du signal RF. La couche de lissage peut être en matériau conducteur ou non conducteur.

L'épaisseur de cette couche de lissage est de préférence comprise entre 5 et 500 microns, de préférence entre 10 et 150 microns, de préférence entre 20 et 150 microns. Dans le cas d'une fabrication de l'âme par stéréolithographie, par selective laser melting, ou par selective laser sintering, cette épaisseur permet de lisser efficacement les irrégularités de surface dues au procédé d'impression.

L'épaisseur de la couche de lissage est de préférence supérieure ou égale à la rugosité (Ra) de l'âme.

L'épaisseur de la couche de lissage est de préférence supérieure ou égale à la résolution du procédé de fabrication de l'âme.

Lorsque la couche de lissage comprend un matériau faiblement conducteur, par exemple le Nickel, la transmission du signal RF est assurée essentiellement par la couche conductrice métallique externe, l'influence de la couche de lissage est négligeable, et dans ce cas la couche conductrice externe doit avoir une épaisseur au moins égale à cinq fois ladite profondeur de peau δ, de préférence au moins égale à vingt fois cette profondeur de peau.

Dans un mode de réalisation, la couche de lissage peut entourer l'âme sans séparer lesdites pièces les unes des autres. Il est ainsi possible de la déposer après l'assemblage des différentes pièces formant l'âme, et avant la déposition de l'enveloppe métallique.

Dans un mode de réalisation, la couche de lissage entoure l'âme en séparant lesdites pièces les unes des autres. Elle est alors déposée avant l'assemblage des pièces formant l'âme. Elle permet d'améliorer la précision de positionnement des pièces en lissant les irrégularités de surface des pièces à la jonction.

La couche de lissage peut être formée de nickel.

Le dispositif peut comporter une couche d'accrochage (ou d'amorçage) déposée après assemblage de l'âme de manière à la recouvrir de manière ininterrompue, l'enveloppe conductrice étant déposée par-dessus la couche de lissage.

La couche d'accrochage peut être en matériau conducteur ou non conducteur. La couche d'accrochage permet d'améliorer l'adhésion de la couche conductrice sur l'âme. Son épaisseur est de préférence inférieure à la rugosité Ra de l'âme, et inférieure à la résolution du procédé de fabrication additive de l'âme.

Dans un mode de réalisation, l'enveloppe externe du dispositif comprend successivement une âme non conductrice réalisée en fabrication additive, une couche d'accrochage, une couche de lissage et une couche conductrice. Ainsi, la couche d'accrochage et la couche de lissage permettent de diminuer la rugosité de la surface du canal guide d'ondes. La couche d'accrochage permet d'améliorer l'adhésion de l'âme, conductrice ou non conductrice, avec la couche de lissage et la couche conductrice.

Dans un mode de réalisation, la couche métallique formant l'enveloppe conductrice comprend plusieurs sous-couches de métaux. Lorsque la couche conductrice comprend plusieurs couches successives de métaux fortement conducteurs, par exemple Cu, Au, Ag, la profondeur de peau □ est déterminée par les propriétés des matériaux de toutes les couches dans lesquelles se concentre le courant pelliculaire.

Dans un mode de réalisation, la couche d'accrochage comprend au choix un métal choisi parmi Cu, Au, Ag, Ni, Al, acier inoxydable, laiton, zincate, un matériau non conducteur par exemple un polymère ou une céramique ou une combinaison de ces choix.

Dans un mode de réalisation, la couche de lissage comprend au choix un métal choisi parmi Cu, Au, Ag, Ni, Al, acier inoxydable, laiton, un matériau non conducteur, par exemple un polymère ou une céramique ou une combinaison de ces choix.

L'âme du dispositif peut être formée d'un matériau polymère.

L'âme du dispositif peut être formée d'un métal ou d'un alliage, par exemple d'aluminium, de titane ou d'acier.

L'âme du dispositif peut être formée de céramique.

L'âme du dispositif peut être réalisé par stéréolithographie, par selective laser melting ou par selective laser sintering.

La couche métallique formant l'enveloppe peut comprendre au choix un métal choisi parmi Cu, Au, Ag, Ni, Al, acier inoxydable, laiton ou une combinaison de ces métaux.

La résistance du dispositif choisie parmi la résistance en traction, en torsion, en flexion ou une combinaison de ces résistances peut être conférée majoritairement par la couche conductrice.

La résistance du dispositif choisie parmi la résistance en traction, en torsion, en flexion ou une combinaison de ces résistances peut être conférée majoritairement par la couche conductrice et par la couche de lissage.

L'invention a aussi pour objet un procédé de fabrication d'un dispositif radiofréquence passif comprenant:

Fabrication additive de plusieurs pièces, au moins une pièce comportant un logement;
Insertion de colle dans ledit logement;
Assemblage des pièces entre elles, de manière à constituer une âme du dispositif, au moins deux pièces étant en contact direct entre elles;
Déposition sur l'âme d'une couche conductrice, sans séparer lesdites pièces les unes des autres.

Ce procédé permet la fabrication de dispositifs complexes par assemblage de pièces réalisées par fabrication additive. La métallisation après assemblage garantit une enveloppe conductrice sans discontinuités.

Comme on le verra, cette fabrication en plusieurs pièces permet aussi un nettoyage ou un polissage des pièces avant leur assemblage, ce qui permet de nettoyer ou de polir des portions difficilement accessibles du dispositif.

Comme on le verra, cette fabrication en plusieurs pièces permet aussi une polymérisation des pièces avant leur assemblage, ce qui permet d'exposer aux rayons ultraviolets des portions à durcir difficilement accessibles du dispositif.

Selon un mode de réalisation, le dépôt de la couche conductrice sur l'âme est effectué par dépôt électrolytique ou galvanoplastie, dépôt chimique, dépôt sous vide, dépôt physique par phase vapeur (PVD), dépôt par impression, dépôt par frittage.

Dans un mode de réalisation du procédé, la couche conductrice comprend plusieurs couches de métaux et/ou de non métaux déposées successivement.

La fabrication de l'âme comporte une étape de fabrication additive. On entend par « fabrication additive » tout procédé de fabrication de pièces par ajout de matière, selon des données informatiques stockées sur un support informatique et définissant un modèle de la pièce. Outre la stéréolithographie et le selective laser melting, l'expression désigne aussi d'autres méthodes de fabrication par durcissement ou coagulation de liquide ou de poudre notamment, y compris sans limitation des méthodes basées sur des jets d'encre (binder jetting), DED (Direct Energy Déposition), EBFF (Electron beam freeform fabrication), FDM (fused deposition modeling), PFF (plastic freeforming), par aérosols, BPM (ballistic particle manufacturing), lit de poudre, SLS (Selective Laser Sintering), ALM (additive Layer Manufacturing), polyjet, EBM (electron beam melting), photopolymerisation, etc. La fabrication par stéréolithographie ou par selective laser melting est cependant préférée car elle permet d'obtenir des pièces avec des états de surface relativement propres, à faible rugosité.

Le procédé peut comporter une étape de déposition d'une couche de lissage autour de l'âme.

La couche de lissage peut être déposée avant assemblage et séparant ainsi lesdites pièces les unes des autres.

La couche de lissage peut être déposée après assemblage ; dans ce cas, elle ne sépare donc pas les pièces de l'âme les unes des autres.

La fabrication de l'âme peut comporter une étape de fabrication additive par stéréolithographie, par selective laser melting ou par selective laser sintering.

La fabrication de l'âme peut comporter une étape de polissage avant assemblage.

La fabrication de l'âme peut comporter une étape de nettoyage avant assemblage.

La fabrication de l'âme peut comporter une étape de durcissement avant assemblage.

La fabrication de l'âme peut comporter une étape de durcissement après assemblage.

La fabrication de l'âme peut comporter une étape de pré-durcissement avant assemblage, et une étape de durcissement définitif après assemblage. Le durcissement définitif peut être utilisé pour fusionner les pièces entre elles.

Le procédé peut comporter la déposition d'une couche d'accrochage autour de l'âme.

Dans le contexte de l'invention, les termes « couche conductrice », « revêtement conducteur », «couche conductrice métallique» et «couche métallique » sont synonymes et interchangeables.

Brève description des figures

Des exemples de mise en œuvre de l'invention sont indiqués dans la description illustrée par les figures annexées dans lesquelles :

- La figure 1A illustre une vue en perspective de deux pièces destinées à être assemblées selon un plan de jonction perpendiculaire à la direction de propagation du signal afin de former une âme de guide d'onde.
- La figure 1B illustre une vue en perspective des deux pièces de la figure 1A après assemblage afin de former une âme de guide d'onde.
- La figure 1C illustre une vue en perspective d'un dispositif comportant une âme en deux pièces assemblées et recouvertes d'une enveloppe conductrice sur les parois internes et externes.
- La figure 1D illustre une vue en coupe longitudinale d'un dispositif comportant une âme en deux pièces assemblées et recouvertes d'une enveloppe conductrice sur les parois internes et externes.
- La figure 2A illustre une vue en perspective de deux pièces destinées à être assemblées selon un plan de jonction parallèle à la direction de propagation du signal, afin de former une âme de guide d'onde.
- La figure 2B illustre une vue en perspective des deux pièces de la figure 2A après assemblage afin de former une âme de guide d'onde.
- La figure 2C illustre une vue en coupe transversale d'un dispositif comportant une âme en deux pièces assemblées et recouvertes d'une enveloppe conductrice sur les parois internes et externes.
- La figure 3A illustre une vue en coupe transversale d'un dispositif selon l'invention, comportant une âme en deux pièces revêtue d'une couche de lissage et d'une enveloppe conductrice.
- La figure 3B illustre une vue en coupe longitudinale d'un dispositif comportant une âme en deux pièces assemblées et recouvertes d'une couche de lissage et d'une enveloppe conductrice sur les parois internes et externes.

Exemple(s) de mode de réalisation de l'invention

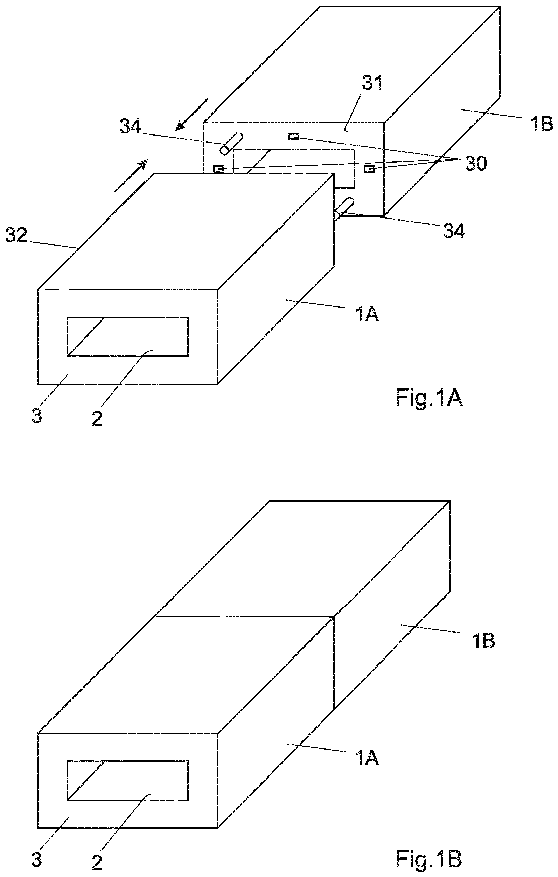

La figure 1A illustre deux pièces 1A et 1B destinées à être assemblées entre elles pour former l'âme 3 d'un dispositif radiofréquence passif, ici un guide d'onde. Les pièces sont munies d'une ouverture longitudinale 2 de section rectangulaire définissant un canal pour la transmission du signal radiofréquence. La section de l'ouverture est déterminée selon la fréquence du signal électromagnétique à transmettre. Les dimensions de ce canal interne et sa forme sont déterminées en fonction de la fréquence opérationnelle du dispositif 1, c'est-à-dire la fréquence du signal électromagnétique pour lequel le dispositif est fabriqué et pour laquelle un mode de transmission stable et optionnellement avec un minimum d'atténuation est obtenu.

Les deux pièces 1A et 1B sont destinées dans cet exemple à être juxtaposées l'une après l'autre dans le sens de transmission du signal, formant ainsi un canal longitudinal continu. Les surfaces 31 destinées à être mises en contact sont planes et perpendiculaires à la direction de transmission du signal radiofréquence. Au moins un de ces surfaces comporte un ou plusieurs logements 30 pour y loger de la colle afin de maintenir les deux pièces 1A, 1B collées l'une à l'autre. Les logements 30 sont prévus sur la surface 31 d'une pièce (ici la pièce 1B) destinée à être mise en contact avec une autre pièce (1A) lors de l'assemblage. Ces logements ne débouchent de préférence pas sur les faces externes ni internes destinées à être recouvertes d'une déposition métallique. Ainsi, la couche métallique est déposée uniquement sur l'âme, et pas sur la colle, ce qui garantit une déposition régulière.

Cette âme 3 délimite un canal interne 2 destiné au guidage d'ondes.

Les pièces 1A, 1B destinées à former l'âme 3 peuvent être par exemple en polymère, en époxy, en céramique, en matériau organique ou en métal (de préférence aluminium, titane, acier, ou invar).

Les pièces 1A et 1B sont fabriquées par fabrication additive, de préférence par stéréolithographie ou par selective laser melting afin de réduire la rugosité de la surface. Le matériau de l'âme peut être non conducteur ou conducteur. L'épaisseur des parois est par exemple entre 0,5 et 3 mm, de préférence entre 0,8 et 1,5 mm.

La forme des pièces 1A, 1B peut être déterminée par un fichier informatique stocké dans un support de données informatique et permettant de commander un dispositif de fabrication additive.

Après fabrication, et avant assemblage, chacune des pièces 1A, 1B peut être séchée, nettoyée et/ou polie pour améliorer l'état de surface. Elle est en outre durcie, au moins partiellement. Le séchage, nettoyage, polissage et/ou durcissement avant assemblage permet d'accéder plus aisément aux portions du dispositif difficilement accessibles après assemblage, par exemple au centre du canal 2. Comme on le verra, il est aussi possible de déposer une couche de lissage avant assemblage.

La figure 1B illustre les deux pièces 1A, 1B après assemblage de manière à former une âme 3. Les pièces sont maintenues par collage au moyen de colle déposée dans les logements de colle 30. On évite de préférence la présence de colle sur les surfaces de contact 31, ce qui améliore la précision d'assemblage. On choisira cependant de préférence une colle qui permet la déposition de métal avec les procédés de déposition retenu ; ainsi, l'éventuelle présence de traces de colle près de la jonction entre deux colles ne provoquera pas d'irrégularités dans la déposition.

Dans un mode de réalisation, les différentes pièces formant l'âme sont prédurcies, par exemple par chauffage et/ou exposition à un rayonnement ultraviolet, avant leur assemblage. Elles sont ensuite juxtaposées, puis une étape de durcissement finale est effectuée en mettant à nouveau les pièces sous un rayonnement ultraviolet ou dans un four. Cette solution permet de fusionner les pièces 1A, 1B entre elles pour faciliter leur assemblage.

Au moins une goupille 34 est de préférence insérée dans un logement pour goupille dans une des surfaces de contact 31, de manière à s'étendre perpendiculairement à cette surface de contact. Cette goupille est de préférence chassée dans le logement, et destinée à s'insérer dans un logement prévu dans la face de contact de la pièce 1A en regard. Cette ou ces goupilles garantit un alignement des pièces 1A, 1B entre elles.

Des vis (non illustrées peuvent aussi être prévues pour maintenir les deux pièces entre elles, au moins pendant le collage.

Un assemblage mécanique par emboitement dans un assemblage clipsé ou de type tenon-mortaise, peut aussi être employé pour fixer les pièces 1A, 1B entre elles.

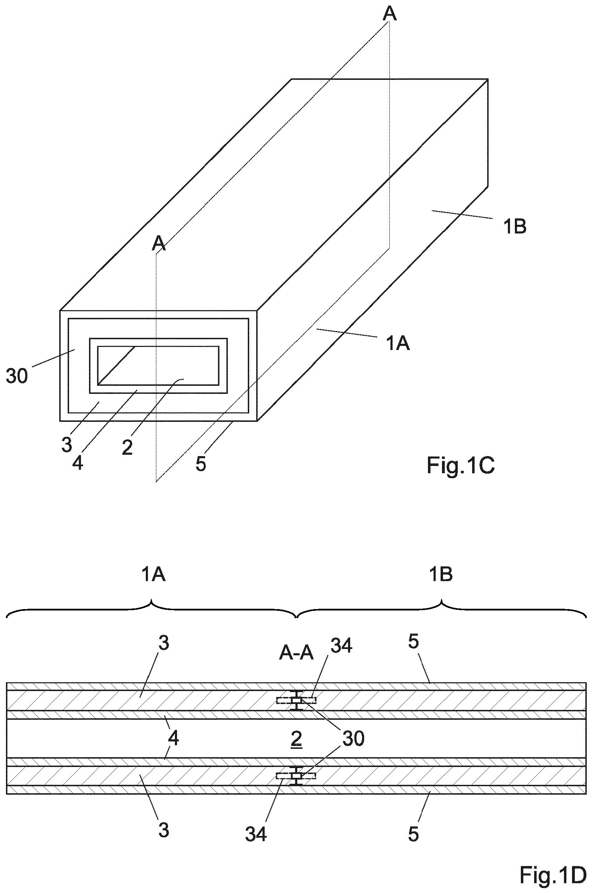

La figure 1C illustre le dispositif formé en revêtant cette âme 3 d'une déposition métallique formant une enveloppe conductrice 4, 5 sur les surfaces internes et externes de l'âme 3. La figure illustre les différentes couches sur la face transversale 32 à l'avant du dispositif; dans un autre mode de réalisation, cette face avant est également métallisée en sorte que les couches internes 3,4 ne sont pas visibles.

Dans ce mode de réalisation illustré, la surface interne et la surface externe de l'âme 3 sont recouvertes d'une couche métallique 4 conductrice, par exemple de cuivre, d'argent, d'or, de nickel etc, plaqué par déposition chimique sans courant électrique. L'épaisseur de cette couche est par exemple comprise entre 1 et 20 micromètres, par exemple entre 4 et 10 micromètres.

L'épaisseur de ce revêtement conducteur 4 doit être suffisante pour que la surface soit conductrice électriquement à la fréquence radio choisie. Ceci est typiquement obtenu à l'aide d'une couche conductrice dont l'épaisseur est supérieure à la profondeur de peau $\delta\square$.

Cette épaisseur est de préférence sensiblement constante sur toutes les surfaces internes afin d'obtenir une pièce finie avec des tolérances dimensionnelles pour le canal précises.

La déposition de métal conducteur 4,5 sur les faces internes et éventuellement externes se fait en immergeant l'âme 3 après assemblage des pièces 1A, 1B dans une série de bains successifs, typiquement 1 à 15 bains. Chaque bain implique un fluide avec un ou plusieurs réactifs. La déposition ne nécessite pas d'appliquer un courant sur l'âme à recouvrir. Un brassage et une déposition régulière sont obtenus en brassant le fluide, par exemple en pompant le fluide dans le canal de transmission et/ou autour du dispositif ou en vibrant l'âme 3 et/ou le bac de fluide, par exemple avec un dispositif vibrant à ultrasons pour créer des vagues ultrasoniques.

Dans un mode de réalisation, l'épaisseur de cette couche 4 est au moins vingt fois supérieure à la profondeur de peau afin d'améliorer les propriétés structurelles, mécaniques, thermiques et chimiques du dispositif. Les courants superficiels se concentrent ainsi majoritairement, voire presque exclusivement, dans cette couche.

L'application d'une déposition métallique sur les surfaces externes ne contribue pas à la propagation du signal radiofréquence dans le canal 2, mais a cependant l'avantage de protéger le dispositif des agressions thermiques, mécaniques, ou chimiques. Dans un mode de réalisation non illustré, seule la surface interne de l'âme, autour du canal 2, est recouverte d'une enveloppe métallique; les surfaces externes sont nues, ou recouvertes d'un revêtement différent.

La figure 1D illustre une vue en coupe longitudinale du dispositif selon le plan A-A de la figure 1C. On voit notamment les deux pièces 1A, 1B maintenues l'une contre l'autre par collage dans les logements de colle 30. Le maintien est également assuré par l'enveloppe métallique 4 continue sur les surfaces internes et externes de l'âme.

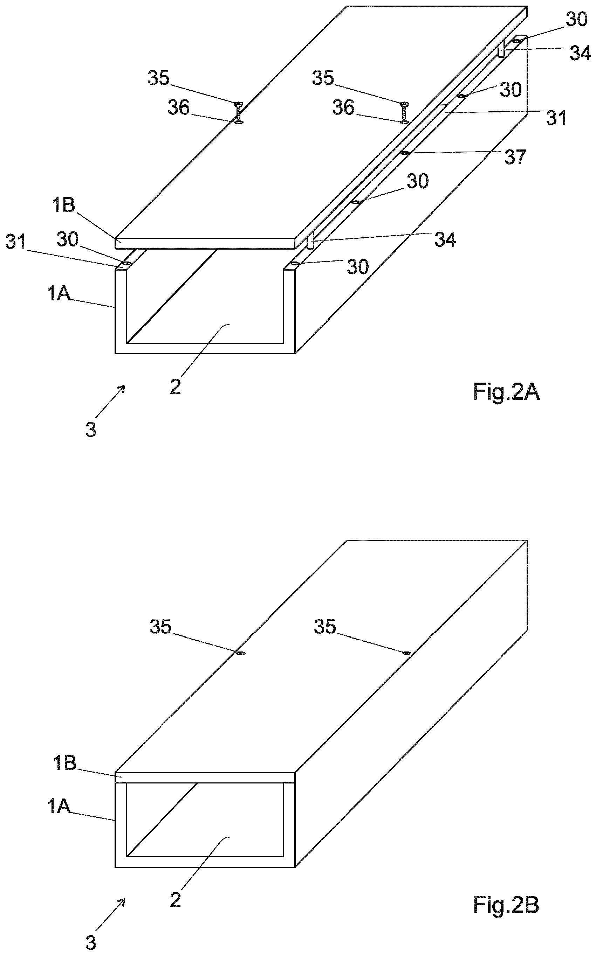

Les figures 2A à 2C illustrent une variante de dispositif; toutes les caractéristiques et étapes décrites plus haut en relation avec les figures 1A à 1D s'appliquent aussi à cette variante, sauf lorsque cela est indiqué autrement.

La figure 2A illustre une variante de dispositif dans lequel l'âme est formée par assemblage de deux pièces 1A et 1B selon un plan de séparation qui s'étend longitudinalement dans le sens de propagation du signal à travers le canal 2. Dans cet exemple, la pièce 1A a une section en forme de U et la pièce 1B a une section rectangulaire formant un couvercle au-dessus de la pièce 1A. Il est aussi possible de réaliser un guide d'onde à section rectangulaire avec deux pièces en U montées tête bêche l'une sur l'autre.

La surface de contact 31 d'une des pièces 1A comporte des logements 30 pour y loger de la colle destinée au maintien des pièces entre elles.

Les deux pièces 1A, 1B sont alignées entre elles au moyen de goupilles 34 s'étendant en saillie depuis la surface d'une des pièces 1A et pénétrant dans un trou borgne dans l'autre pièce 1B. Les goupilles sont ainsi cachées après assemblage.

La figure 2B montre l'âme du dispositif après assemblage et collage des deux pièces 1A et 1B.

Les deux pièces 1A, 1B sont de préférence maintenues serrées entre elles au moyen de vis 35 traversant des trous 36 à travers l'une des pièces 1A et engagées dans des trous 37 taraudés dans l'autre pièce. Ces vis peuvent être insérées avant collage, et retirées après durcissement de la colle. Dans une variante, il est possible de conserver des vis qui ne dérangent pas la déposition de l'enveloppe métallique.

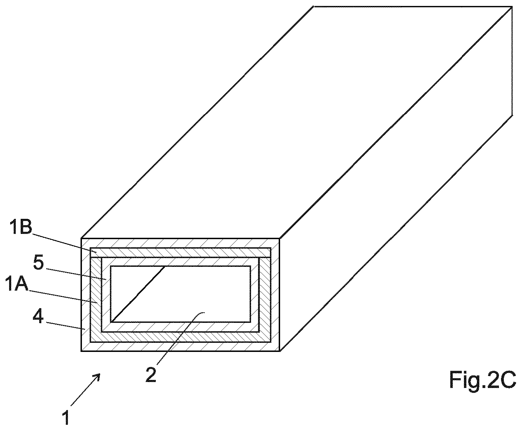

La figure 2C montre une vue en coupe transversale du dispositif après revêtement des faces internes et externes de l'âme 3 par une enveloppe métallique.

Il est possible de réaliser une âme de dispositif radiofréquence passif en assemblant plus de deux pièces. Il est possible d'assembler des pièces selon des plans qui ne sont ni longitudinaux, ni transversaux, ou selon des surfaces non planes.

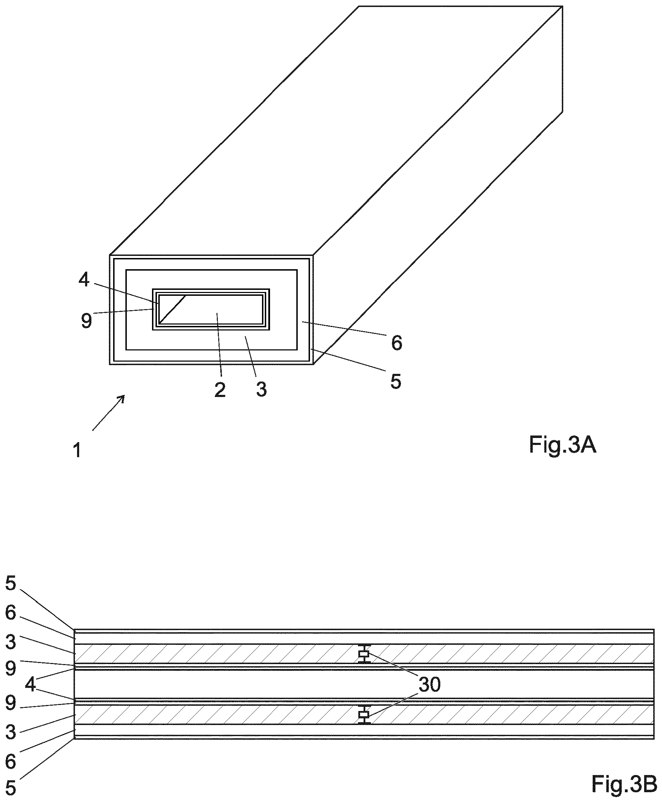

Les figures 3A à 3B illustrent une variante de dispositif; toutes les caractéristiques et étapes décrites plus haut en relation avec les figures 1A à 1D et 2A à 2C s'appliquent aussi à cette variante, sauf lorsque cela est indiqué autrement.

La figure 3A montre une vue en coupe transversale d'une autre variante de dispositif dans lequel l'âme 3 est revêtue par une première couche de lissage 9, 6 puis par la couche conductrice 4, 5. La figure 3A montre une vue en coupe longitudinale de ce dispositif.

Dans le mode de réalisation illustré sur la figure 3A, les surfaces de l'âme 3 sont recouvertes après assemblage d'une couche de lissage 9, par exemple une couche en Ni. L'épaisseur de la couche de lissage 9 est au moins égale à la rugosité Ra de la surface de l'âme, ou au moins égale à la résolution du procédé d'impression 3D utilisé pour fabriquer l'âme (la résolution du procédé d'impression 3D déterminant la rugosité Ra de la surface). Dans un mode de réalisation, l'épaisseur de cette couche est comprise entre 5 et 500 micromètres, de préférence entre 10 et 150 micromètres, de préférence entre 20 et 150 micromètres. Cette couche de lissage détermine également les propriétés mécaniques et thermiques du dispositif 1. La couche de Ni 9 est ensuite recouverte de la couche conductrice 4, par exemple en cuivre, en argent, en or etc.

La couche de lissage permet de lisser la surface de l'âme et donc de réduire les pertes de transmission dues à la rugosité de la surface interne.

Dans ce mode de réalisation, l'âme 3 est donc recouverte d'une couche métallique 4+9 formée d'une couche de lissage 9 et d'une couche conductrice 4. L'épaisseur totale de cette couche 4+9 est de préférence supérieure ou égale à cinq fois, de préférence vingt fois la profondeur de peau $\delta$. La valeur du module de Young du dispositif 1 est conférée majoritairement par cette couche conductrice 4+9. L'épaisseur de la couche conductrice 4 peut aussi à être seule être supérieure ou égale à vingt fois la profondeur de peau $\delta\square\square$La couche la plus conductrice est de préférence déposée en dernier, à la périphérie.

La couche de lissage illustrée sur cet exemple est déposée après assemblage des différentes pièces 1A, 1B formant l'âme ; elle ne sépare donc pas les pièces, et n'est pas déposée sur les surfaces de jonction 31 entre pièces.

Dans un mode de réalisation non illustré, la couche de lissage est déposée avant assemblage des différentes pièces 1A, 1B formant l'âme; elle sépare donc les pièces, en recouvrant les surfaces de jonction 31 entre pièces. Ce mode de réalisation permet d'obtenir des surfaces de jonction 31 entre pièces 1A, 1B de l'âme plus lisses, et donc d'améliorer la précision et la rigidité de l'assemblage.

Dans un mode de réalisation non illustré, le dispositif 1 comprend une couche d'accrochage, par exemple une couche en Cu, par-dessus la surface interne et éventuellement externe de l'âme 3; cette couche d'accrochage facilite la déposition ultérieure de la couche de lissage 9 si une telle couche est prévue, ou de la couche conductrice 4. L'épaisseur de cette couche est avantageusement inférieure à 30 micromètres. Cette couche d'accrochage est de préférence déposée après assemblage, et ne recouvre donc pas les surfaces de jonction 31 entre pièces.

Il est aussi possible de réaliser des dispositifs radiofréquence passifs comprenant une âme formée par assemblage de plusieurs pièces sans collage, au moins certaines desdites pièces étant fabriquées individuellement par fabrication additive et alignées à l'aide de goupilles, une enveloppe conductrice métallique étant déposée sur ladite âme sans séparer lesdites pièces les unes des autres. Les autres caractéristiques de l'invention décrite ci-dessus, hormis le collage, peuvent aussi s'appliquer à ces dispositifs.

Il est aussi possible de réaliser des dispositifs radiofréquence passifs comprenant une âme formée par assemblage de plusieurs pièces, au moins certaines desdites pièces étant fabriquées individuellement par fabrication additive et alignées à l'aide de goupilles, une enveloppe conductrice métallique étant déposée sur ladite âme sans séparer lesdites pièces les unes des autres, une couche de lissage étant déposée sur lesdites pièces avant leur assemblage. Les autres caractéristiques de l'invention décrite ci-dessus, avec ou sans collage, peuvent aussi s'appliquer à ces dispositifs.

Numéros de référence employés sur les figures

| 1 | Dispositif radiofréquence passif |
|---|---|
| 2 | Canal guide d'onde |
| 3 | Âme |
| 30 | Logement pour colle |
| 31 | Surface de contact |
| 32 | Face externe |
| 34 | Goupille |
| 35 | Vis |
| 36 | Trou traversant |
| 37 | Trou borgne, par exemple trou taraudé |
| 4 | Revêtement conducteur interne |
| 5 | Revêtement conducteur externe |
| 6 | Couche de lissage ou structurelle |
| 9 | Couche de lissage |

**Revendications**

1. Dispositif radiofréquence passif (1) comprenant:

   - une âme (3) formée par assemblage de plusieurs pièces (1A, 1B) en contact direct les unes contre les autres, au moins une desdites pièces comportant un logement (30) pour la colle, au moins certaines desdites pièces étant fabriquées individuellement par fabrication additive;
   - une enveloppe conductrice métallique (4) entourant ladite âme (3) de manière ininterrompue, sans séparer lesdites pièces (1A, 1B) les unes des autres.

2. Dispositif (1) selon la revendication 1, lesdites pièces (1A, 1B) étant collées entre elles au moyen d'une colle chargée de particules métalliques ou céramiques pour faciliter l'assemblage.

3. Dispositif (1) selon l'une des revendications 1 à 2, lesdites pièces (1A, 1B) étant alignées entre elles à l'aide d'au moins une goupille s'étendant perpendiculairement à la surface de collage.

4. Dispositif (1) selon l'une des revendications 1 à 3, lesdites pièces (1A, 1B) étant munies de trous de vissage (36, 37) pour le maintien desdites pièces entre elles au moins pendant le collage.

5. Dispositif (1) selon l'une des revendications 1 à 4, lesdites pièces (1A, 1B) étant clipsées entre elles.

6. Dispositif (1) selon l'une des revendications 1 à 5, lesdites pièces (1A, 1B) étant fusionnées entre elles.

7. Dispositif (1) selon l'une des revendications 1 à 6, ladite enveloppe conductrice métallique (4, 5) recouvrant les faces de l'âme de manière ininterrompue et sans joint entre lesdites pièces.

8. Dispositif (1) selon l'une des revendications 1 à 7, l'épaisseur de ladite couche conductrice métallique (4,5) étant au moins égale à cinq fois la profondeur de peau $\delta$.

9. Dispositif (1) selon l'une des revendications 1 à 8, lesdites pièces (1A, 1B) étant séparées les unes des autres dans un plan perpendiculaire ou parallèle à la direction de propagation du signal.

10. Dispositif (1) selon l'une des revendications 1 à 9, comportant une couche de lissage (6, 9) destinée à lisser au moins partiellement les irrégularités de la surface de l'âme (3), l'enveloppe conductrice (4, 5) étant déposée par-dessus la couche de lissage (6, 9).

11. Dispositif (1) selon l'une des revendications 1 à 10, comportant une couche d'accrochage déposée après assemblage de l'âme (3) de manière à la recouvrir de manière ininterrompue, l'enveloppe conductrice (4, 5) étant déposée par-dessus la couche d'accrochage.

12. Procédé de fabrication d'un dispositif radiofréquence passif (1), le procédé comprenant:

   - fabrication additive de plusieurs pièces (1A, 1B), au moins une desdites pièces comportant un logement (30) destiné à de la colle;
   - insertion de colle dans ledit logement (30) ;
   - assemblage des pièces (1A, 1B) entre elles, de manière à constituer une âme (3) du dispositif, au moins deux pièces (1A, 1B) étant en contact direct entre elles;
   - déposition sur l'âme (3) d'une couche conductrice (4,5), sans séparer lesdites pièces les unes des autres.

**13.** Procédé selon la revendication 12, comportant une étape d'insertion d'au moins une goupille (34) dans une des pièces (1A, 1B) avant ledit assemblage, ladite goupille (34) permettant d'aligner les pièces assemblées.

**14.** Procédé selon l'une des revendications 12 à 13, comportant une étape de déposition d'une couche de lissage (6, 9) autour de ladite âme.

**15.** Procédé selon l'une des revendications 12 à 14, comportant la déposition d'une couche d'accrochage autour de ladite âme (3).

**Patentansprüche**

**1.** Passive Funkfrequenzvorrichtung (1), die enthält:

- einen Kern (3), der durch Zusammenbau mehrerer Bauteile (1A, 1B) in direktem Kontakt miteinander gebildet wird, wobei mindestens eines der Bauteile eine Aufnahme (30) für den Klebstoff aufweist, wobei mindestens bestimmte der Bauteile einzeln durch additive Fertigung hergestellt werden;
- eine metallische leitende Hülle (4), die den Kern (3) ununterbrochen umgibt, ohne die Bauteile (1A, 1B) voneinander zu trennen.

**2.** Vorrichtung (1) nach Anspruch 1, wobei die Bauteile (1A, 1B) mittels eines mit metallischen oder keramischen Teilchen angereicherten Klebstoffs zusammengeklebt werden, um den Zusammenbau zu vereinfachen.

**3.** Vorrichtung (1) nach einem der Ansprüche 1 bis 2, wobei die Bauteile (1A, 1B) mit Hilfe mindestens eines Stifts, der sich lotrecht zur Klebfläche erstreckt, zueinander ausgerichtet werden.

**4.** Vorrichtung (1) nach einem der Ansprüche 1 bis 3, wobei die Bauteile (1A, 1B) mit Schraublöchern (36, 37) für den Halt der Bauteile aneinander zumindest während des Klebvorgangs versehen sind.

**5.** Vorrichtung (1) nach einem der Ansprüche 1 bis 4, wobei die Bauteile (1A, 1B) miteinander eingerastet werden.

**6.** Vorrichtung (1) nach einem der Ansprüche 1 bis 5, wobei die Bauteile (1A, 1B) miteinander verschmolzen werden.

**7.** Vorrichtung (1) nach einem der Ansprüche 1 bis 6, wobei die metallische leitende Hülle (4, 5) die Seiten des Kerns ununterbrochen und ohne Fuge zwischen den Bauteilen bedeckt.

**8.** Vorrichtung (1) nach einem der Ansprüche 1 bis 7, wobei die Dicke der metallischen leitenden Schicht (4, 5) mindestens gleich dem Fünffachen der Hauttiefe $\delta$ ist.

**9.** Vorrichtung (1) nach einem der Ansprüche 1 bis 8, wobei die Bauteile (1A, 1B) in einer Ebene lotrecht oder parallel zur Ausbreitungsrichtung des Signals voneinander getrennt sind.

**10.** Vorrichtung (1) nach einem der Ansprüche 1 bis 9, die eine Glättungsschicht (6, 9) aufweist, die dazu bestimmt ist, die Unregelmäßigkeiten der Fläche des Kerns (3) zumindest teilweise zu glätten, wobei die leitende Hülle (4, 5) über der Glättungsschicht (6, 9) aufgebracht wird.

**11.** Vorrichtung (1) nach einem der Ansprüche 1 bis 10, die eine Haftschicht aufweist, die nach dem Zusammenbau des Kerns (3) aufgebracht wird, um ihn ununterbrochen zu bedecken, wobei die leitende Hülle (4, 5) über der Haftschicht aufgebracht wird.

**12.** Verfahren zur Fertigung einer passiven Funkfrequenzvorrichtung (1), wobei das Verfahren enthält:

- additive Fertigung mehrerer Bauteile (1A, 1B), wobei mindestens eines der Bauteile eine für Klebstoff bestimmte Aufnahme (30) aufweist;
- Einführen von Klebstoff in die Aufnahme (30);
- Zusammenbau der Bauteile (1A, 1B) miteinander, um einen Kern (3) der Vorrichtung zu bilden, wobei mindestens zwei Bauteile (1A, 1B) in direktem Kontakt miteinander sind;
- Aufbringen einer leitenden Schicht (4, 5) auf den Kern (3), ohne die Bauteile voneinander zu trennen.

**13.** Verfahren nach Anspruch 12, das einen Schritt des Einführens mindestens eines Stifts (34) in eines der Bauteile (1A, 1B) vor dem Zusammenbau aufweist, wobei der Stift (34) die Ausrichtung der zusammengebauten Bauteile ermöglicht.

**14.** Verfahren nach einem der Ansprüche 12 bis 13, das einen Schritt des Aufbringens einer Glättungsschicht (6, 9) um den Kern herum aufweist.

**15.** Verfahren nach einem der Ansprüche 12 bis 14, das das Aufbringen einer Haftschicht um den Kern (3) herum aufweist.

**Claims**

**1.** Passive radiofrequency device (1) comprising:

- a core (3) formed by the assembly of several pieces (1A, 1B) in direct contact against one another, at least one of said pieces comprising a recess (30) for the glue, at least some of said pieces being manufactured individually by additive manufacturing;

- a conductive metal jacket (4) surrounding said core (3) uninterruptedly, without separating said pieces (1A, 1B) from one another.

2. Device (1) according to Claim 1, said pieces (1A, 1B) being glued together by means of a glue filled with metal or ceramic particles to facilitate the assembly.

3. Device (1) according to one of Claims 1 and 2, said pieces (1A, 1B) being aligned with one another using at least one pin extending at right angles to the gluing surface.

4. Device (1) according to one of Claims 1 to 3, said pieces (1A, 1B) being provided with screw holes (36, 37) to hold said pieces together at least during the gluing.

5. Device (1) according to one of Claims 1 to 4, said pieces (1A, 1B) being clipped together.

6. Device (1) according to one of Claims 1 to 5, said pieces (1A, 1B) being fused together.

7. Device (1) according to one of Claims 1 to 6, said conductive metal jacket (4, 5) covering the faces of the core uninterruptedly and without any join between said pieces.

8. Device (1) according to one of Claims 1 to 7, the thickness of said conductive metal layer (4, 5) being at least equal to five times the skin depth $\delta$.

9. Device (1) according to one of Claims 1 to 8, said pieces (1A, 1B) being separated from one another in a plane at right angles or parallel to the direction of propagation of the signal.

10. Device (1) according to one of Claims 1 to 9, comprising a smoothing layer (6, 9) intended to at least partially smooth the surface irregularities of the core (3), the conductive jacket (4, 5) being deposited on top of the smoothing layer (6, 9).

11. Device (1) according to one of Claims 1 to 10, comprising a bond coat deposited after the assembly of the core (3) so as to cover it uninterruptedly, the conductive jacket (4, 5) being deposited on top of the bond coat.

12. Method for manufacturing a passive radiofrequency device (1), the method comprising:

- additive manufacturing of several pieces (1A, 1B), at least one of said pieces comprising a recess (30) intended for glue;
- insertion of glue into said recess (30);
- assembly of the pieces (1A, 1B) together, so as to form a core (3) of the device, at least two pieces (1A, 1B) being in direct contact with one another;
- deposition on the core (3) of a conductive layer (4, 5), without separating said pieces from one another.

13. Method according to Claim 12, comprising a step of insertion of at least one pin (34) into one of the pieces (1A, 1B) before said assembly, said pin (34) making it possible to align the assembled pieces.

14. Method according to one of Claims 12 and 13, comprising a step of deposition of a smoothing layer (6, 9) around said core.

15. Method according to one of Claims 12 to 14, comprising the deposition of a bond coat around said core (3) .

Fig.1A

Fig.1B

Fig.1C

Fig.1D

Fig.2A

Fig.2B

1B
5
1A
4
2
1

Fig.2C

Fig.3A

Fig.3B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120033931 A1
- US 20120084968 A1

- US 3577105 A

**Littérature non-brevet citée dans la description**

- **MARIO D'AURIA et al.** 3-D PRINTED METAL-PIPE RECTANGULAR WAVEGUIDES. *IEEE Transactions on components, packaging and manufacturing technologies,* 21 Août 2015, vol. 5 (9), 1339-1349